# EUROPÄISCHE PATENTSCHRIFT

(11) **EP 1 775 039 B1**
(45) Veröffentlichungstag und Bekanntmachung des Hinweises auf die Patenterteilung: **16.04.2008**
(21) Anmeldenummer: 06021533.2
(22) Anmeldetag: 13.10.2006
(51) Int. Cl.: B21B 45/02, B05B 1/30

(54) **Sprühdüsenventil zum Einbau in einen Düsenbalken**
Spray nozzle valve for mounting in a nozzle bar
Vanne de buse d'éjection pour le montage dans une barre à buses

(30) Priorität: 14.10.2005 DE 102005049172
(43) Veröffentlichungstag der Anmeldung: 18.04.2007
(73) Patentinhaber: ACHENBACH BUSCHHÜTTEN GmbH, 57223 Kreuztal (DE); IMI Norgren Buschjost GmbH & Co. KG, 32545 Bad Oeynhausen (DE)
(72) Erfinder: Knappmeier, Friedrich H., 32545 Bad Oeynhausen (DE)
(74) Vertreter: Engelmann, Kristiana

(56) Entgegenhaltungen:
- EP-A2- 1 142 653
- DE-A1- 19 503 544
- JP-A- 8 112 604
- US-A- 4 081 141

## Beschreibung

Die Erfindung betrifft ein Sprühdüsenventil zum Einbau in einen Düsenbalken an einem Walzgerüst nach dem Oberbegriff des Anspruchs 1 sowie einen entsprechenden Düsenbalken nach Anspruch 10.

Düsenbalken werden insbesondere in Kaltwalzwerken als Walzenkühl- und/oder Schmiervorrichtung z.B. bei der Feinband- und Folienherstellung eingesetzt und mit druck- und/oder mengen- und/oder temperaturgesteuerten Kühl- und Schmiermittel, insbesondere Walzöl bzw. Emulsion betrieben. Zur Abfuhr der Umformwärme, zur örtlichen Beeinflussung des thermischen Walzendurchmessers und zur Veränderung der Walzbedingungen im Walzspalt ist eine feinfühlige, zuverlässige Beaufschlagung der Walzenoberfläche mittels Sprühdüsen zur Regelung der Temperaturverteilung in den Walzen und zur Ausregelung örtlicher Unplanheiten erforderlich. Die Ansteuerung der Sprühdüsen erfolgt über elektrische und/oder pneumatische Ventile. Die immer größer werdende Anforderung an die Planheit des Bandmaterials verlangt eine kleinere Düsenaufteilung im Düsenbalken und eine exakte Steuerung der Ventile selbst. Ferner ist es erforderlich, bei Funktionsausfall einer Sprüheinheit diese einfach und schnell nach Möglichkeit walzenseitig austauschen zu können.

Aus der DE 201 06 972 U ist eine Walzenkühl- und/oder Schmiervorrichtung mit elektrisch/pneumatisch vorgesteuerten Sprühdüsenventilen bekannt, deren Sprühdüsenventilkolben walzenseitig ausbaubar ist. Nachteilig ist, das erst nach Demontage der Front- und Befestigungsplatten der Kolben selbst, jedoch nicht der Ventilsitzring und das elektrisch verdrahtete, pneumatische Vorsteuerventil zugänglich ist.

Ein Sprühventil nach der WO-A 99/01226 zeigt einen mittels eines elektrischen Schrittmotors für die Freigabe einer differenzierten Kühlmittelmenge mechanisch gesteuerten Aufbau, bei dem der Steuerkolben mit seiner Verstellspindel in einem zur Walzenseite hin ausbaubaren Einsatzteil untergebracht ist. Dem Verschleiß unterliegende Teile, wie Kupplung und Schrittmotor sind nicht ohne Demontage des Düsenbalkens und der Verkabelung austauschbar. Unabhängig davon stellt sich bauartbedingt eine unvertretbar große Ventilöffnungs- und Schließzeit ein, sodaß kurze Planheitsabweichungen nicht hinreichend schnell ausgeregelt werden können und kleine Düsenabstände kaum realisierbar erscheinen.

Eine in der DE-A 195 03 544 offenbarte Walzenkühl- und/oder Schmiervorrichtung zeigt zwar einen theoretisch von der Walzenseite her austauschbaren Düsenkopf einschließlich der Dichtungsfeder und des Betätigungsstößels; die dem Verschleiß unterliegenden mechanischen Kuppelteile zum Stößel, die des hydraulischen, pneumatischen oder elektromagnetischen Stellgliedes, sowie die Längsführung des Stößels und dessen Abdichtung sind dabei jedoch nur nach vollständiger Demontage austauschbar.

Ein in der DE-A 40 30 388 beschriebenes Sprühventil besteht aus einem einerseits am Spritzbalken befestigten Elektromagneten mit Polkern und andererseits walzenseitig in den Spritzbalken eingebrachten und mit dem Elektromagneten zusammenwirkenden inneren Ventilgehäuse, welches über ein äußeres Ventilgehäuse mittels eines Deckels mit dem Spritzbalken axial verspannt ist. Nachteilig an dieser Ausführung ist, daß nicht alle Verschleißteile, wie der Rückstellbolzen im Polkern und die beiden Ventilgehäuse als ganze Einheit auszutauschen sind. Außerdem mündet die bauartbedingte Entlastungsbohrung walzenseitig ins Freie, die bewegten Massen insbesondere des Polankers sind groß, und eine kleine Düsenteilung von z.B. 1" ist schwer verwirklichbar.

Der Erfindung liegt die Aufgabe zugrunde, die Wartung eines Walzgerüstes bei mechanischen Störungen im Sprühdüsensystem möglichst einfach zu gestalten, sowie einen kleinen Düsenabstand für eine feinfühlige Beeinflussung der örtlichen Temperaturen zu ermöglichen. Diese Aufgabe wird erfindungsgemäß durch ein Sprühdüsenventil mit den Merkmalen des Anspruchs 1 sowie einen mit derartigen Sprühdüsenventilen versehenen Düsenbalken gemäß Anspruch 10 gelöst.

Die erfindungsgemäße Ausgestaltung des Sprühdüsenventils nutzt die Erkenntnis, dass Störungen des Sprühdüsensystems statistisch bedeutsam nur in mechanisch beanspruchten Teilen eines Sprühdüsenventils auftreten, dagegen gelten die elektromagnetisch, statisch unbewegten Spulenkörper als störungsfrei. Durch die feste Verbindung eines den Steuermagneten enthaltenden Magnetelementes des Düsenventils mit den Düsenbalken und die Integration des Ventilkörpers in eine von der Vorderseite des Düsenbalkens in das Magnetelement einsteckbare, alle nicht elektrischen Ventilkomponenten umfassende Ventilpatrone, kann die Verkabelung am Magnetelement bestehenbleiben, auch wenn die kompakte Ventilpatrone mit dem Ventilkörper getauscht werden muß. Sämtliche mechanischen Komponenten, d.h. alle beweglichen und alle abdichtenden Teile sind dabei in die Ventilpatrone integriert. Stillstandzeiten des Walzgerüstes werden dadurch minimiert und die Wirtschaftlichkeit der gesamten Walzanlage erheblich erhöht.

Vorzugsweise hat das Ventil mit dem Magnet nur Wirkverbindung, ist aber mit dem Magnet selbst nicht fest verbunden, sondern nur über den Düsenbalken. Dabei sind Ventilpatrone und Magnetelement bevorzugt so ausgebildet, daß sich die Ventilpatrone zu ihrem hinteren Ende, das den Magnetanker beinhaltet, hin verjüngt und der Magnetanker in das Magnetelement eintaucht.

Weitere Vorteile und Einzelheiten ergeben sich aus den Unteransprüchen und einem in den Zeichnungen dargestellten Ausführungsbeispiel, das im folgenden beschrieben wird; es zeigen:
- Fig. 1: zwei Ventilpatronen der Bauart NO normally open komplett in einem Teil eines Düsenbalkens,
- Fig. 2: Detail aus Fig. 1 bei unbestromtem Magnet ohne Fluiddruck,
- Fig. 3: Detail aus Fig. 1 bei unbestromtem Magnet und einsetzendem Fluiddruck,
- Fig. 4: Detail aus Fig. 1 bei unbestromtem Magnet und Fluiddruck > 0,
- Fig. 5: Detail aus Fig. 1 bei bestromtem Magnet und Fluiddruck > 0, und
- Fig. 6: eine Darstellung entsprechend Fig. 1 mit Ventilpatronen der Bauart NC normally closed.

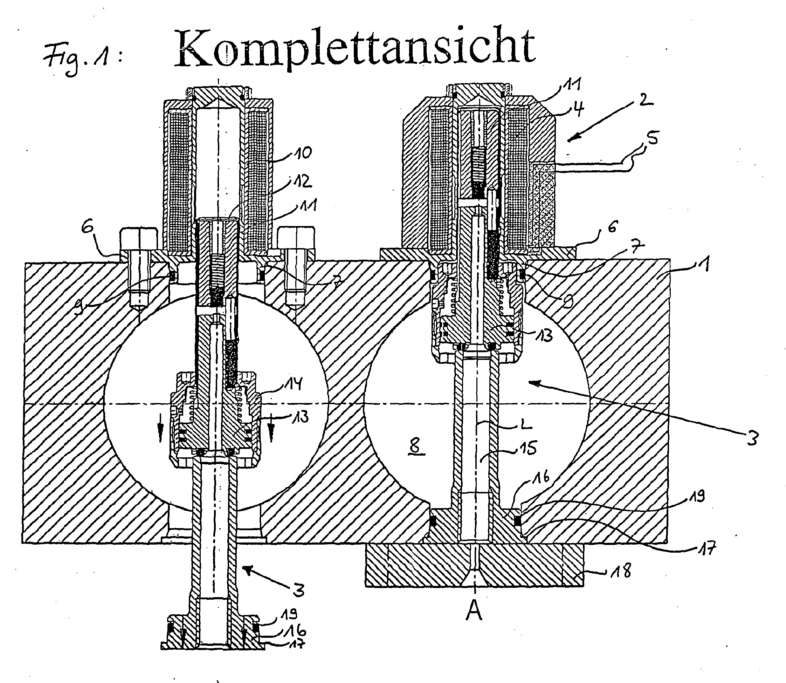

In Fig. 1 ist ein Teil eines Düsenbalkens 1 mit exemplarisch zwei Sprühdüsenventilen dargestellt. Das rechte Sprühdüsenventil ist fest montiert abgebildet, während beim linken Sprühdüsenventil gerade die Demontage gezeigt wird. Der Düsenbalken 1 in seiner nicht dargestellten Gesamtheit nimmt bis zu ca. 300 Sprühdüsenventile auf, die auch in mehreren Reihen hintereinander angeordnet sein können.

Die einzelnen Sprühdüsenventile sind im wesentlichen zweigeteilt ausgebildet und besitzen ein Magnetelement 2 sowie eine Ventilpatrone 3. Das Magnetelement 2 beinhaltet den Steuermagneten in Form einer auf einen Spulenträger 10 gewickelten Elektromagnetspule 4, die auf der Hinterseite des Düsenbalkens 1 über elektrische Steuerleitungen 5 bestrombar ist. Das Magnetelement 2 ist fest mit den Düsenbalken 1 an dessen Rückseite verbunden, vorzugsweise dort über einen Flansch 6 des Magnetelementes 2 angeschraubt, wie beim linken Ventil der Fig. 1 zu sehen. Das rechte Ventil der Fig. 1 ist identisch mit dem Düsenbalken 1 verbunden, jedoch zur Veranschaulichung um 45 Grad verdreht dargestellt. Vom Flansch 6 aus erstreckt sich ein Ansatz 7 in eine rückseitige Öffnung des Düsenbalkens 1 hinein, die in eine Druckkammer 8 mündet, die Teil des sich durch den Düsenbalken 1 erstreckenden Druckkanalsystems für die Sprühfluidversorgung ist. Der Ansatz 7 dichtet über einen O-Ring 9 die hintere Öffnung des Düsenbalkens 1 ab.

Während das Magnetelement 2 von der Rückseite des Düsenbalkens 1 aus montiert und mit diesem fest verbunden wird, wird die Ventilpatrone 3 von der Vorderseite des Düsenbalkens 1 aus in diesen hineingesteckt. Sie ist daher jederzeit tauschbar, auch ohne den Düsenbalken 1 selbst demontieren zu müssen und ohne daß man an die Rückseite des Düsenbalkens 1 heran muß. Beim linken Ventil in Fig. 1 deuten die Pfeile die Demontagerichtung der Ventilpatrone 3 an. Die Ventilpatrone 3 verjüngt sich zu deren hinteren Ende hin und beinhaltet dort einen Magnetanker 11, der in montierter Position in das Magnetelement 2 eintaucht. Der Magnetanker 11 ist in einer Buchse 12 frei verschiebbar gehalten. Unterhalb des Magnetankers 11 erstreckt sich der Ventilkolben 13, der teils ebenfalls in der Buchse 12 des Magnetankers 11 und im unteren Bereich in einer Zylinderbuchse 14 in Richtung der Längsachse L verschiebbar geführt ist. Die Zylinderbuchse 14 geht an ihrem vorderen Ende in einen Düsenkanal 15 über, der ebenfalls Teil des Ventilkörpers ist. Das vordere Ende der Ventilpatrone wird durch einen Dichtkranz 16 gebildet, der mit einem integrierten O-Ring 19 die vordere Öffnung der Druckkammer 8 abdichtet. Über eine Schulter 17 liegt der Ventilkörper an den Düsenbalken 1 in montiertem Zustand an, so daß der Ventilkörper nicht in den Düsenbalken 1 hineinrutschen kann. Gehalten ist die gesamte Ventilpatrone 3 an dem Düsenbalken 1 durch eine vorgesetzte Düsenplatte 18, die wiederum mit dem Düsenbalken 1 mechanisch verbunden, beispielweise verschraubt ist. Die Düsenplatte 18 kann nicht nur zur Befestigung einer Ventilpatrone 3 ausgelegt, sondern auch wesentlich größer als abgebildet ausgebildet sein und gruppenweise mehrere oder sogar alle Ventilpatronen 3 gleichzeitig festlegen.

Wie an den Spalten erkennbar ist, besteht bei der dargestellten Ausführungsform zwischen der Ventilpatrone 3 und dem Magnetelement 2 auch in eingebautem Zustand keine Berührung. In jedem Fall sind die Elektromagnetspule 4 einerseits und den Magnetanker 11 andererseits nicht direkt mechanisch verbunden, sondern es besteht nur eine Wirkverbindung.

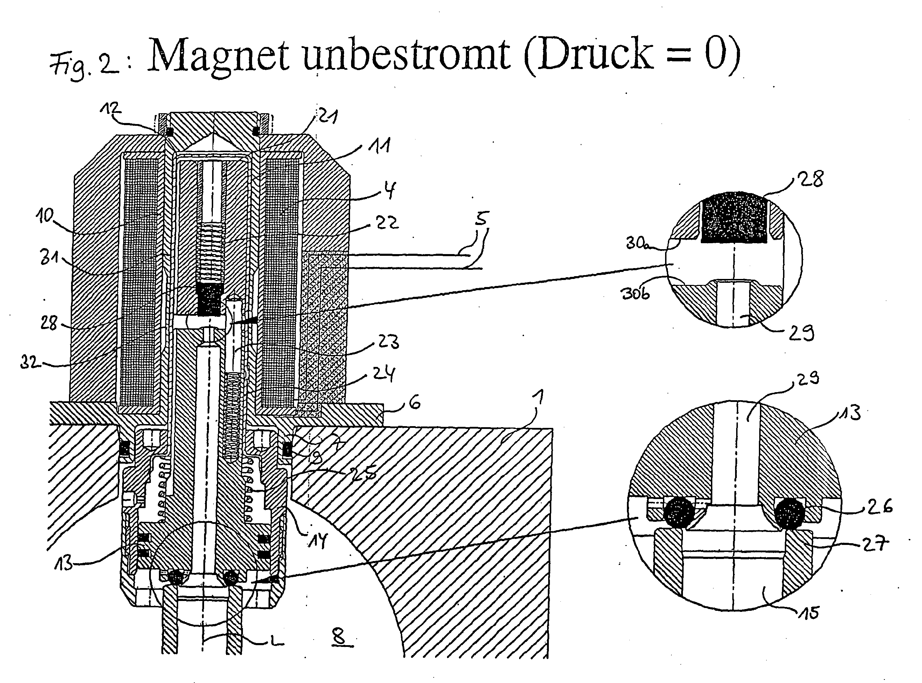

Die Funktionsweise des Ventils ist in den Fig. 2 bis 5 näher erkennbar. Fig. 2 zeigt das Ventil bei unbestromtem Magneten 4 und im drucklosen Zustand, d.h. ohne Fluiddruck in der Druckkammer 8. Dabei befindet sich der Magnetanker 11 in der oberen Entlastungsposition, in der er durch einen Distanzstift 23 und eine Öffnungsfeder 24 gehalten wird. Eine Schließfeder 25 im Inneren des Ventilkörpers drückt dabei den Ventilkolben 13 mit einem in seiner Unterseite aufgenommenen Dichtring 26 gegen einen Ventilsitz 27 und verschließt so den Düsenkanal 15 im drucklosen Zustand.

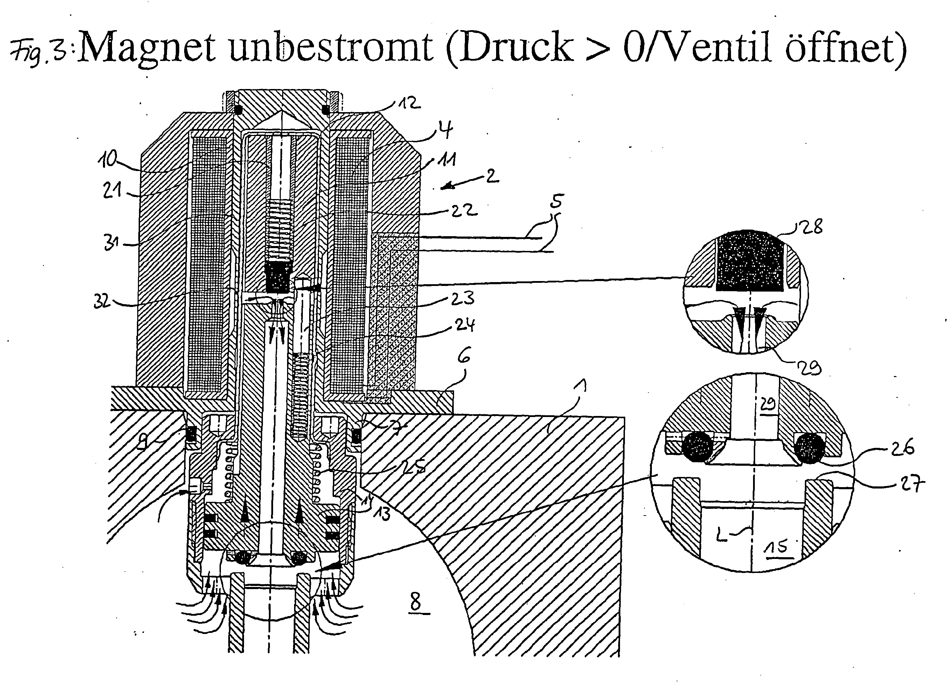

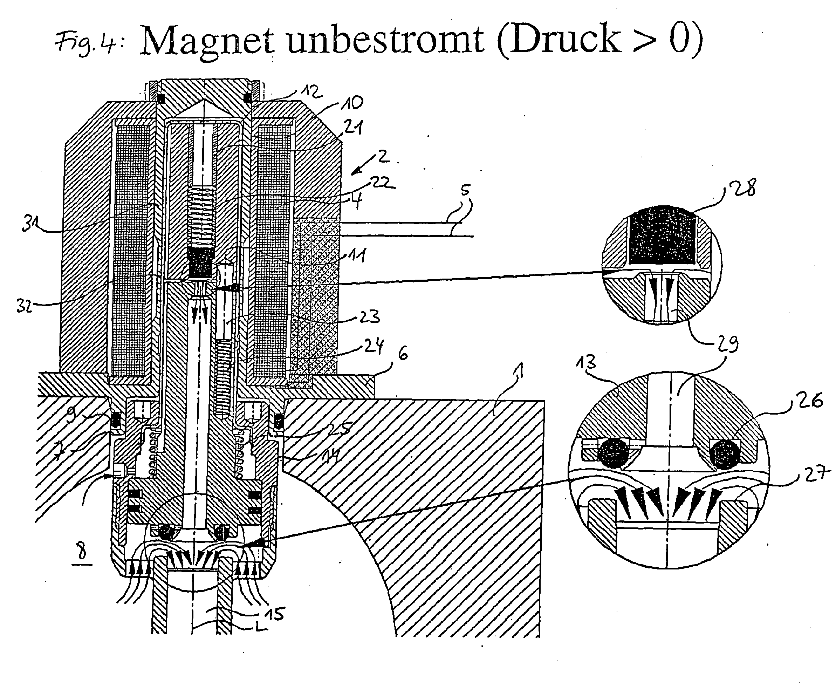

Fig. 3 zeigt das Ventil bei unbestromtem Magnet, jedoch einsetzendem Fluiddruck, wodurch das Ventil öffnet. Ventile dieser Bauart, die im stromlosen jedoch druckbelasteten Zustand geöffnet sind, werden NO-Ventile (normally open) genannt. Der Magnetanker 11 verharrt dabei wie auch in der Position gemäß Fig. 2 und 4 weiterhin am oberen Anschlag. Durch den einsetzenden Fluiddruck wird jedoch der Ventilkolben 13 gegen die Kraft der Schließfeder 25 nach oben gedrückt, wodurch sich der Ventilkolben 13 mit seinem Dichtring 26 von dem Ventilsitz 27 abhebt. Dadurch kann das Fluid über die mit Pfeilen markierten Positionen in die Ventilpatrone 3 eintreten und so auch durch den Düsenkanal 15 zum Düsenaustritt gelangen. Bei einem eventuellen Stromausfall läuft daher in der NO-Ventilvariante weiterhin Fluid aus.

Fig. 4 zeigt den Zustand beispielsweise bei Stromausfall mit umbestromtem Magneten 4 und anstehendem Fluiddruck in der Druckkammer 8.

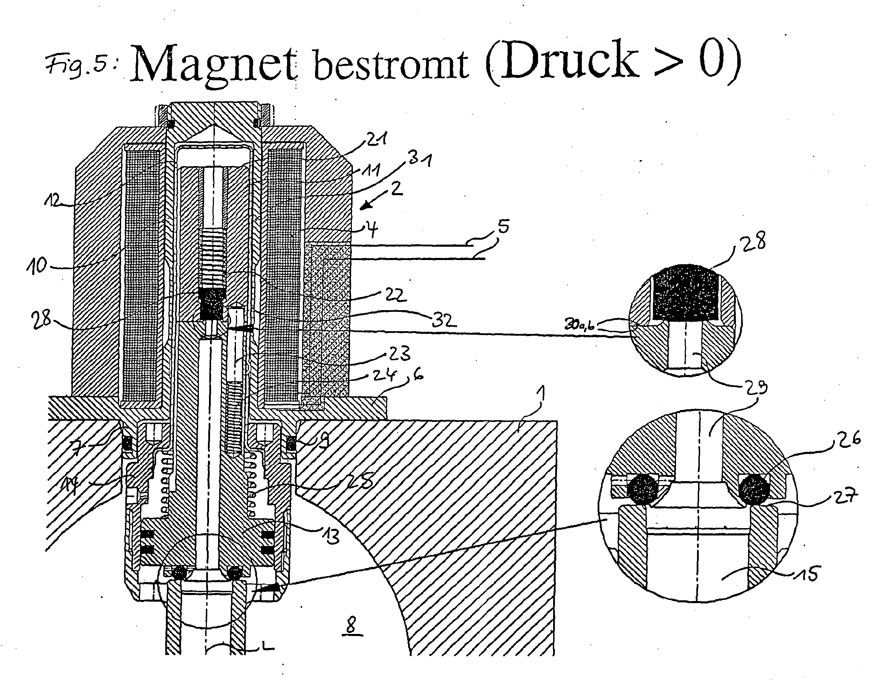

Fig. 5 zeigt das Ventil, wenn dieses angesteuert wird durch Bestromung des Magneten 4. Durch das sich über die Elektromagnetspule 4 aufbauende Magnetfeld wird der Magnetanker 11 nach unten gezogen, wobei ein im Magnetanker 11 angeordneter Dichtstopfen 28 die Steuerbohrung 29 verschließt. Der Dichtstopfen 28 ist über eine Ankerfeder 22 und eine Spannhülse 21 federnd gelagert, um einen metallischen Kontakt zwischen den Polflächen 30a und 30b zu ermöglichen. Es kann kein Fluid mehr durch die Steuerbohrung 29 fließen und die auf den Ventilkolben 13 einwirkenden Druckverhältnisse durch das Fluid ändern sich so, daß sich der Ventilkolben 13 zusammen mit dem Magnetanker 11 nach unten bewegt und den Düsenkanal 15 verschließt. Durch den Steuermagneten wird somit direkt nur das Öffnen und Schließen der Steuerbohrung 29 gesteuert und darüber nur mittelbar der Fluidfluß zum Düsenausgang. Dies hat den Vorteil, daß mit geringen Magnetkräften und somit kleinbauenden Magnetspulen 4 und Magnetelementen 2 dennoch hohe Schließdrücke und hohe Durchflußmengen aufgebracht werden können.

Da Ventilpatrone 3 und Magnetelement 2 zum Austausch oder Reparatur der Ventilpatrone 3 voneinander getrennt werden können, ist es wichtig, sicherzustellen, daß auch in diesem Zustand (siehe Fig. 1 links) kein Fluid in den Elektrobereich des Magnetelementes 2, insbesondere zur Elektromagnetspule 4 vordringen kann.
Fluide beispielsweise zur Kaltwalzung von Aluminium enthalten üblicherweise neben Petroleum auch Alkohole, Ester, Säure und weitere Additive, sind daher sehr aggressiv gegenüber Buntmetallen, und somit würde die Kupfer-Elektromagnetspule 4 stark angegriffen. Dieses Problem wird bei dem erfindungsgemäßen Sprühdüsenventil dadurch gelöst, daß die Elektromagnetspule 4 des Magnetelementes 2 innenseitig gegenüber der Ventilseite gegen Fluide angedichtet ist. Die Abdichtung erfolgt bei der dargestellten Ausführungsform bevorzugt durch eine Hülse 31, in die der Magnetanker 11 der Ventilpatrone 3 eingeschoben ist. Die Hülse 31 ist zur verbesserten Sicherstellung einer Dichtigkeit endseitig an ihrem oberen Ende geschlossen ausgebildet. Vorzugsweise besteht diese Hülse aus gegenüber dem Fluid resistentem Stahl. Zur Funktionsverbesserung des Sprühdüsenventils weist die Hülse 31 eine vorzugsweise umlaufende Verjüngung 32 ihrer Wandstärke auf, die eine Reduzierung des magnetischen Widerstands bewirkt und dazu führt, daß die an der Elektromagnetspule aufgebauten Feldlinien tatsächlich durch den Magnetanker 11 hindurchgeleitet werden. Alternativ kann die Erstreckung von Feldlinien durch die Hülse 31 auch dadurch verhindert werden, indem die grundsätzlich aus ferritischem Material bestehende Hülse 31 einen umlaufenden, das ferritische Material unterbrechenden Ring aus nicht magnetisierbarem, z.B. austenitischem Material aufweist.

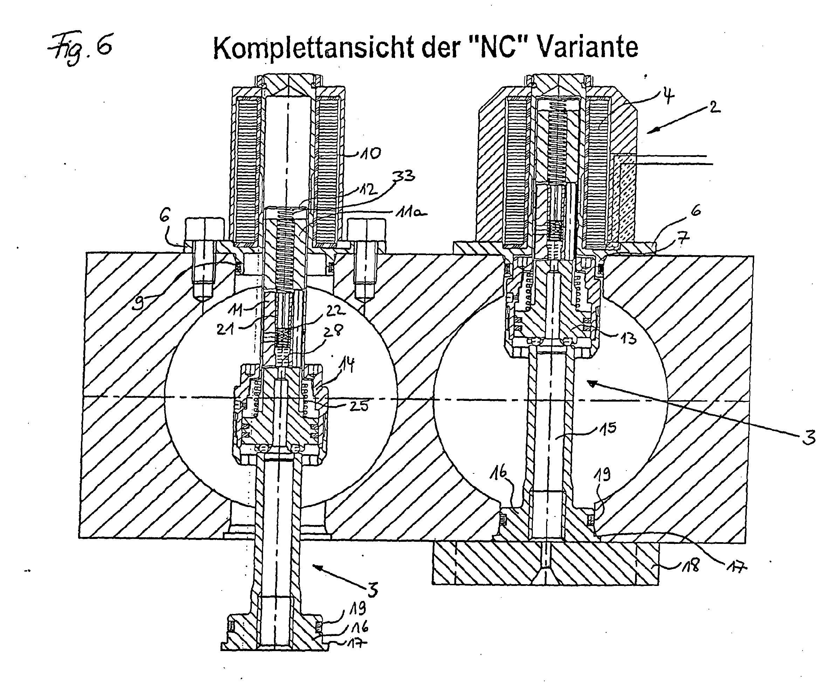

Neben der vorstehend zu den Fig. 1 bis 5 beschriebenen Funktionsvariante eines im unbestromten Zustand geöffneten Sprühdüsenventils gelangen auch im unbestromten Zustand geschlossene Sprühdüsenventile zum Einsatz. Eine solche NC-Bauart ist in Fig. 6 dargestellt, wobei entsprechende Teile mit Bezugsziffern wie in Fig. 1 ff. bezeichnet sind. Abweichend ist bei der NC-Variante der Magnetanker 11, 11a zweiteilig ausgebildet und über eine Schließfeder 33 vorgespannt. Die Wahl der stromlos geöffneten (normally opened / NO) oder stromlos geschlossenen (normally closed / NC) Sprühdüsenventile orientiert sich am jeweiligen Einsatzfall und den Betriebsbedingungen. Z.B. kann es beim Einsatz in Folienwalzwerken unter Anwendung von kerosinähnlichem Walzöl als vorteilhaft erachtet werden, NO-Ventile einzusetzen, um auch beim Abbremsen des Walzwerkes bei Stromausfall eine Kühl- und Schmierfunktion zur Verhinderung von Walzenbeschädigungen und Bandrissen aufrecht zu erhalten, bzw. NC-Ventile bei Betriebsbedingungen unter höheren Temperaturen im Walzspalt einzusetzen um bei einem eventuellen durch Bandriß verursachten Brand, eine Brandnährung zu unterbinden.

Die gezeigte Ausführungsform der Ventilpatrone 3 mit einem servogesteuerten Kolbenventil, d.h. pilotgesteuerten Kolben-Magnetventil, bietet einen komfortablen Aufbau und ermöglicht die Verwendung kleiner Magnetelemente 2 auf der Düsenbalkenrückseite, auf der in der Regel wenig Platz zur Verfügung steht. Vorteilhafterweise ist es jedoch ebenfalls möglich, entgegen dem Einbau von der Walzenseite auch im Zuge von Reparaturen oder Modernisierungen einen Einbau einer modifizierten, alle mechanischen Komponenten umfassenden Ventilpatrone 3, von der Magnetseite her vorzusehen. Zwar ist hierbei ein Lösen der Verkabelung unumgänglich, jedoch bleibt der Vorteil des einfachen Austauschs der kompletten Ventilpatrone 3 erhalten.

## Patentansprüche

1. Sprühdüsenventil zum Einbau in einen Düsenbalken (1) an einem Walzgerüst mit einem Ventilkörper und einem Steuermagneten der mit dem Düsenbalken (1) verbindbar ist, wobei der Steuermagnet in einem Magnetelement (2) fest mit dem Düsenbalken (1) verbindbar ausgestaltet ist, **dadurch gekennzeichnet, daß** der Ventilkörper in eine alle nicht elektrischen Ventilkomponenten umfassende Ventilpatrone (3) integriert und von der Vorderseite des Düsenbalkens (1) aus ohne Demontage das Magnetelementes (2) vom Düsenbalken (1) in das Magnetelement (2) einsteckbar und wieder entfernbar ist.

2. Sprühdüsenventil nach Anspruch 1, **dadurch gekennzeichnet, daß** die Ventilpatrone (3) sich zu ihrem den Magnetanker (11) beinhaltenden hinteren Teil hin verjüngt und der Magnetanker (11) in das Magnetelement (2) eintaucht.

3. Sprühdüsenventil nach einem der vorhergehenden Ansprüche, **dadurch gekennzeichnet, daß** die Ventilpatrone (3) mit dem Magnetelement (2) in Wirkverbindung, jedoch nicht in direkter mechanischer Verbindung steht.

4. Sprühdüsenventil nach einem der vorhergehenden Ansprüche, **dadurch gekennzeichnet, daß** der Steuermagnet direkt ein Öffnen oder Schließen der Steuerbohrung (29) steuert und darüber nur indirekt den Fluidfluß zum Düsenausgang.

5. Sprühdüsenventil nach einem der vorhergehenden Ansprüche, **dadurch gekennzeichnet, daß** das Magnetelement (2) gegenüber der Druckseite des Düsenbalkens (1) über zumindest eine Dichtung (9) abgedichtet ist.

6. Sprühdüsenventil nach einem der vorhergehenden Ansprüche, **dadurch gekennzeichnet, daß** die Spule (4) des Steuermagneten innenseitig gegenüber der Ventilseite gegen Fluide abgedichtet ist.

7. Sprühdüsenventil nach Anspruch 6, **dadurch gekennzeichnet, daß** die Abdichtung des Steuermagneten über eine Hülse (31) erfolgt.

8. Sprühdüsenventil nach Anspruch 7, **dadurch gekennzeichnet, daß** die Hülse (31) endseitig geschlossen ist.

9. Sprühdüsenventil nach Anspruch 7 oder 8, **dadurch gekennzeichnet, daß** die Hülse (31) eine umlaufende Verjüngung (32) aufweist.

10. Düsenbalken (1) mit mehreren Sprühdüsenventilen nach einem der vorhergehenden Ansprüche 1 bis 9.

11. Düsenbalken (1) nach Anspruch 10, **dadurch gekennzeichnet, daß** die Ventilpatronen (3) über eine vorgesetzte Düsenplatte (18), die an dem Balken (1) befestigt ist, in/an dem Balken (1) gehalten sind.

12. Düsenbalken (1) nach Anspruch 10 oder 11, **dadurch gekennzeichnet, daß** die Ventilkörper über eine Schulter (17) an dem Düsenbalken (1) anliegen.

## Claims

1. Spray-nozzle valve for fitting to a nozzle bar (1) on a roll stand, having a valve body-part and having a controlling solenoid which can be connected to the spray bar, the controlling solenoid being designed to be solidly connectable to the nozzle bar (1) in a solenoid element (2), **characterised in that** the valve body-part is incorporated in a valve cartridge (3) comprising all the non-electrical components of the valve, and can be inserted and removed again from the solenoid element (2) from the front side of the nozzle bar (1) without the solenoid element (2) having to be removed from the nozzle bar (1).

2. Spray-nozzle valve according to claim 1, **characterised in that** the valve cartridge (3) reduces in diameter in the direction of its rear part which incorporates the armature (11) of the solenoid, and the armature (11) of the solenoid penetrates into the solenoid element (2).

3. Spray-nozzle valve according to either of the foregoing claims, **characterised in that** the valve cartridge (3) is operatively connected to the solenoid element (2) but is not directly mechanically connected thereto.

4. Spray-nozzle valve according to one of the foregoing claims, **characterised in that** the controlling solenoid controls the opening or closing of the controlling bore (29) directly and, by this means, the flow of fluid to the outlet of the nozzle only indirectly.

5. Spray-nozzle valve according to one of the foregoing claims, **characterised in that** the solenoid element (2) is sealed off from the part under pressure of the nozzle bar (1) via at least one seal (9).

6. Spray-nozzle valve according to one of the foregoing claims, **characterised in that** the coil (4) of the controlling solenoid is sealed off internally from the valve side, against fluids.

7. Spray-nozzle valve according to claim 6, **characterised in that** the controlling solenoid is sealed off via a sleeve (31).

8. Spray-nozzle valve according to claim 7, **characterised in that** the sleeve (31) is sealed off at an end or ends.

9. Spray-nozzle valve according to claim 7 or 8, **characterised in that** the sleeve (31) has a reduction in diameter (32) which extends the whole way round it.

10. Nozzle bar (1) having a plurality of spray-nozzle valves according to one of claim 1 to 9 above.

11. Nozzle bar (1) according to claim 10, **characterised in that** the valve cartridges (3) are held in/on the bar by means of a nozzle plate (18) fitted in front of them which is fixed to the bar (1).

12. Nozzle bar (1) according to claim 10 or 11, **characterised in that** the valve body-parts bear against the nozzle bar (1) by means of a shoulder (17).

## Revendications

1. Vanne de buse de pulvérisation pour montage dans une rampe à buses (1) d'un laminoir, comprenant un corps de vanne et un électro-aimant de commande pouvant être relié à la rampe à buses (1), où l'électro-aimant de commande est réalisé de façon à pouvoir être relié de façon fixe à la rampe à buses (1) à l'intérieur d'un élément à électro-aimant (2),
**caractérisée en ce que** le corps de vanne est intégré dans une cartouche de vanne (3) comprenant tous les composants non électriques de la vanne, et peut être emboîté dans l'élément à électro-aimant (2), et retiré de celui-ci, depuis la face avant de la rampe à buses (1), sans démontage de l'élément à électro-aimant (2) de la rampe à buses (1).

2. Vanne de buse de pulvérisation selon la revendication 1, **caractérisée en ce que** la cartouche de vanne (3) se resserre en direction de la partie arrière de celle-ci, qui contient l'induit (11) de l'électro-aimant, et que l'induit (11) de l'électro-aimant plonge dans l'élément à électro-aimant (2).

3. Vanne de buse de pulvérisation selon l'une des revendications précédentes, **caractérisée en ce que** la cartouche de vanne (3) se trouve en liaison d'action, mais non pas en liaison mécanique directe, avec l'élément à électro-aimant (2).

4. Vanne de buse de pulvérisation selon l'une des revendications précédentes, **caractérisée en ce que** l'électro-aimant de commande commande de façon directe une ouverture ou fermeture du trou de pilotage (29), et ne commande que de façon indirecte, par cet intermédiaire, le flux de fluide vers la sortie de la buse.

5. Vanne de buse de pulvérisation selon l'une des revendications précédentes, **caractérisée en ce que** l'élément à électro-aimant (2) est rendu étanche face au côté pression de la rampe à buses (1) au moyen d'au moins une bague d'étanchéité (9).

6. Vanne de buse de pulvérisation selon l'une des revendications précédentes, **caractérisée en ce que** l'intérieur de la bobine (4) de l'électro-aimant de commande est rendu étanche aux fluides, face au côté vanne.

7. Vanne de buse de pulvérisation selon la revendication 6, **caractérisée en ce que** l'étanchéité de l'électro-aimant de commande est réalisée au moyen d'une douille (31).

8. Vanne de buse de pulvérisation selon la revendication 7, **caractérisée en ce que** la douille (31) est fermée à un bout.

9. Vanne de buse de pulvérisation selon la revendication 7 ou 8, **caractérisée en ce que** la douille (31) présente un resserrement périphérique (32).

10. Rampe à buses (1) comprenant plusieurs vannes de buses de pulvérisation selon l'une quelconque des revendications précédentes 1 à 9.

11. Rampe à buses (1) selon la revendication 10, **caractérisée en ce que** les cartouches de vannes (3) sont retenues dans/sur la rampe (1) par l'intermédiaire d'une plaque à buses (18) montée frontalement, qui est fixée sur la rampe (1).

12. Rampe à buses (1) selon la revendication 10 ou 11, **caractérisée en ce que** les corps de vannes s'appuient sur la rampe à buses (1) par l'intermédiaire d'un épaulement (17).
